# FASCICULE DE BREVET EUROPEEN

(11) **EP 0 907 546 B1**
(45) Date de publication et mention de la délivrance du brevet: **13.02.2002**
(21) Numéro de dépôt: 97935610.2
(22) Date de dépôt: 23.07.1997
(51) Int. Cl.: B62D 53/00, B62D 47/02, B62D 1/26, B61D 17/20, B61F 3/12, B60D 5/00

(54) **LIAISON COMPOSITE ARTICULEE ENTRE DEUX VOITURES SUCCESSIVES D'UN VEHICULE DE TRANSPORT EN COMMUN SEPAREES PAR UN MODULE INTERMEDIAIRE PORTE PAR UN ESSIEU**
ZUSAMMENGESETZTE GELENKKUPPLUNG ZWISCHEN ZWEI WAGENTEILEN EINES NAHVERKERSFAHRZEUGES, DIE DURCH EIN VON EINER ACHSE GETRAGENEM ZWISCHENMODUL GETRENNT SIND
COMPOSITE ARTICULATED COUPLING BETWEEN TWO COMPONENTS OF A PUBLIC TRANSPORT VEHICLE SEPARATED BY AN INTERMEDIATE AXLE-MOUNTED MODULE

(30) Priorité: 26.07.1996 FR 9609613
(43) Date de publication de la demande: 14.04.1999
(73) Titulaire: Lohr Industrie, 67980 Hangenbieten (FR)
(72) Inventeur: ANDRE, Jean-Luc, F-67210 Obernai (FR); KOERBER, Martin, F-67190 Mutzig (FR)
(74) Mandataire: Metz, Paul
(86) Numéro de dépôt international: FR9701375
(87) Numéro de publication internationale: WO9804450

(56) Documents cités:
- EP-A- 0 177 424
- EP-A- 0 291 681
- EP-A- 0 479 458
- WO-A-95/34435
- FR-A- 2 374 195
- FR-A- 2 549 436

## Description

La présente invention concerne une liaison composite articulée entre deux voitures successives d'une rame routière autoguidée de transport en commun selon les caractéristiques de la revendication principale.

On connaît déjà des rames routières de transport en commun comportant les caractéristiques du préambule de la revendication principale par le brevet FR-2705620 au nom de la société LOHR INDUSTRIE.

Les rames routières articulées de transport en commun décrites dans ce brevet, se composent de plusieurs voitures supportées et reliées entre elles à chaque fois par un module intermédiaire porté par un essieu non guidé au sol qui forment ensemble une rame.

Cette constitution de rame permet notamment de réduire l'emprise au sol dans les virages grâce à la liaison articulée qui assure le maintien relatif en position des voitures et des modules même dans le cas de courbes prononcées et de voies irrégulières.

Cet avantage est perfectible en montant sur chaque module un dispositif de guidage au sol et notamment un dispositif de guidage le long d'un rail au sol.

Ces dispositifs de guidage au sol existent. Ils permettent de garantir un encombrement minimal dans les courbes. Il s'agit notamment de dispositifs à bras relevable comportant en extrémité un couple de galets inclinés venant en prise sur le rail de guidage.

Ces dispositifs nécessitent une place inférieure disponible suffisante de part et d'autre de l'essieu pour les loger mais aussi un certain espace en profondeur pour permettre la manoeuvre de relevage.

La solution précédemment décrite dans ce brevet au nom de la société LOHR INDUSTRIE ne permet pas, avec une véhicule routier de ce type, de monter un ou de tels dispositifs de guidage en raison de la présence des articulations inférieures qui occupent un emplacement rentrant dans le volume utile nécessaire aux bras de guidage et à leur manoeuvre en basculement de relevage.

Cette difficulté apparait de façon encore plus aiguë pour des véhicules dont le plancher doit se rapprocher du sol.

Même si on trouvait le moyen de loger ces dispositifs de guidage en maintenant les articulations inférieures à leur place, ou en les déplaçant peu, on prendrait le risque d'appliquer dans les courbes des efforts importants sur les galets dont l'usure serait accélérée et le fonctionnement moins sûr.

Les avantages seuls d'une plus faible emprise au sol ne suffisent plus aujourd'hui, les municipalités réclament en plus actuellement des voitures dont les marchepieds arrivent à niveau avec le quai de manière à faciliter l'accès à bord des enfants, des handicapés et les voitures ou les fauteuils roulants dans lesquels ils se déplacent.

Les différentes solutions antérieures relatives à cette exigence dans le domaine des transports en commun concernent des véhicules ferroviaires qui ne présentent pas les mêmes contraintes de roulage et d'encombrement.

La présente invention a un premier but général qui consiste à réduire les accélérations latérales parasites au niveau des liaisons entre les voitures, préjudiciables au confort des passagers et en conséquence de réduire l'usure des galets de guidage. Elle vise également un deuxième but qui consiste, tout en équipant les modules intermédiaires de dispositifs inférieurs d'autoguidage, de dégager de la place en partie inférieure des voitures et des modules intermédiaires pour permettre de rabaisser le plancher en vue de le mettre à niveau avec la plate-forme du quai.

Le dernier but consiste à permettre l'intercirculation au travers des modules intermédiaires malgré toutes les contraintes énumérées ci-dessus et dans le cadre d'une rame routière autoguidée.

L'invention constitue par ailleurs, une alternative intéressante aux systèmes de transport en commun d'investissement lourd comme le tramway.

La solution inventive consiste à rapprocher le plus possible de l'axe de pivotement perpendiculaire à l'essieu en son milieu, les axes verticaux de pivotement des liaisons articulées de pivotement avant et arrière par lesquelles deux voitures adjacentes sont reliées au module intermédiaire correspondant.

Comme déjà indiqué, cette solution inventive résulte de la recherche de l'amélioration du confort des passagers selon laquelle les accélérations latérales provoquant les ballottements désagréables auxquels ils sont soumis à l'entrée des courbes ou par suite des irrégularités du relief doivent être réduites le plus possible.

Cette réduction des accélérations latérales entraîne corrélativement une moindre usure des galets de guidage en raison des moindres efforts qui s'exercent sur ces galets.

Par ailleurs, la solution inventive procure un gain intéressant en volume dans la partie basse des voitures et du module intermédiaire grâce à l'allégement des structures inférieures résultant de la prise en charge des principaux efforts par les structures supérieures.

Par ailleurs également, la solution inventive permet d'obtenir un passage d'intercirculation de dimensions suffisantes à travers le module intermédiaire.

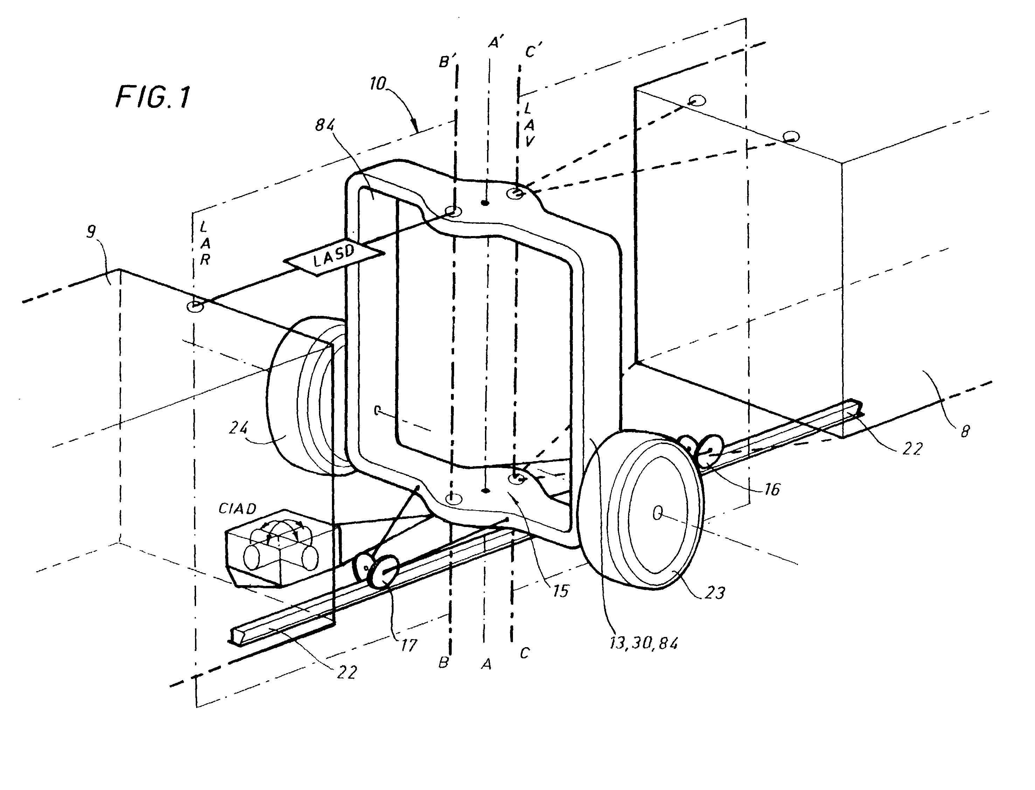

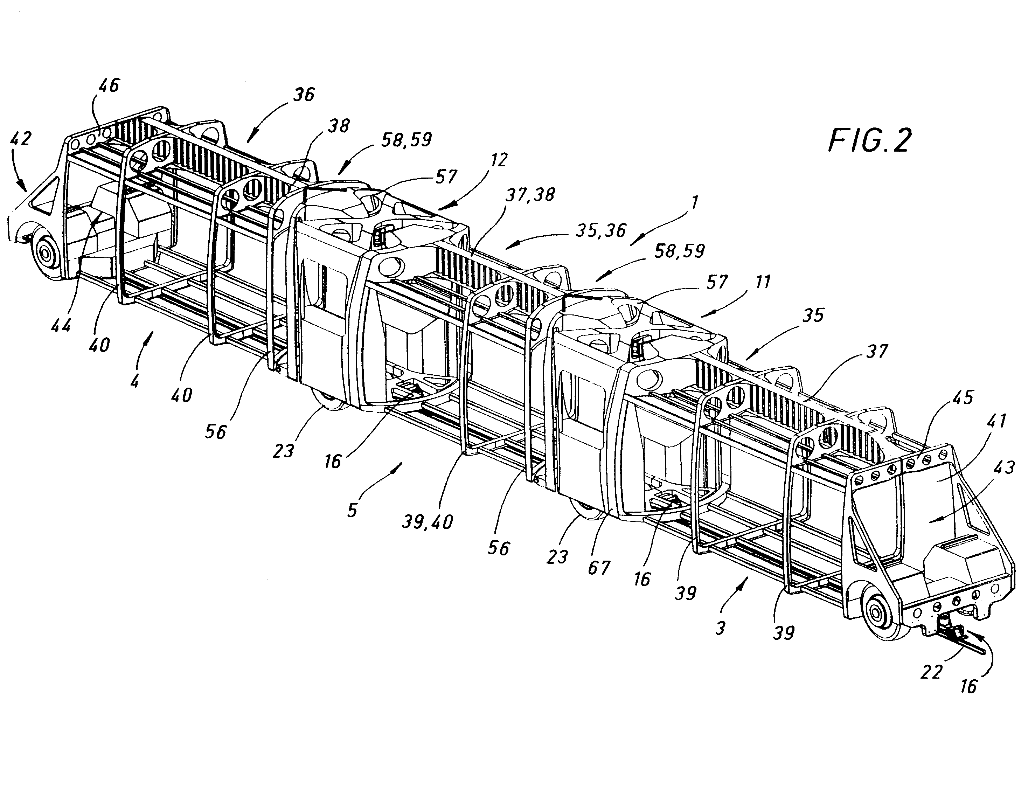

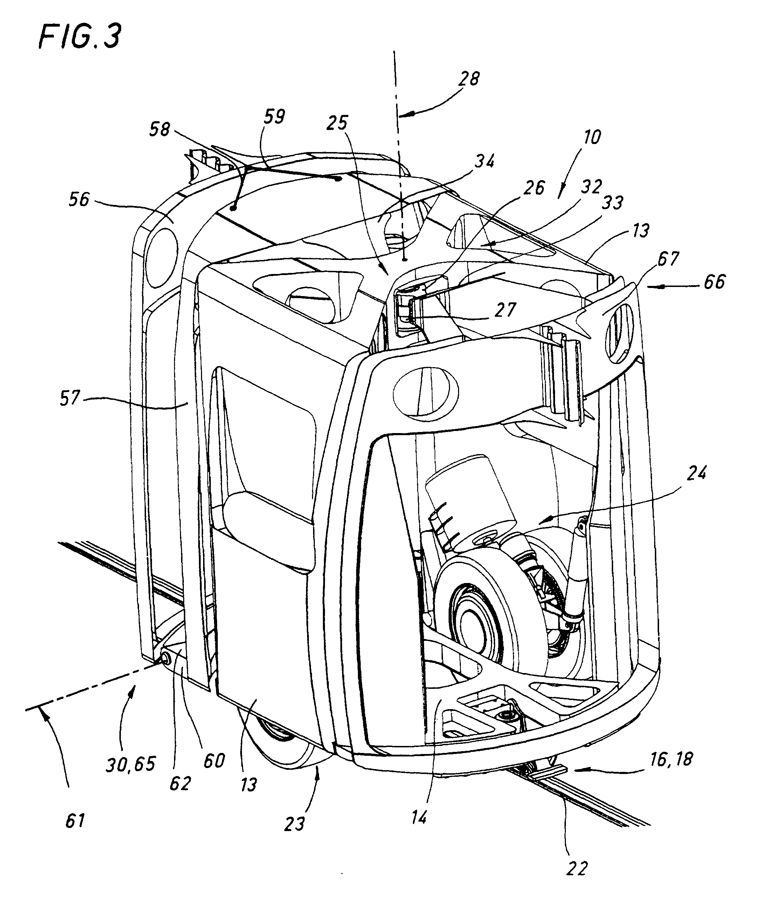

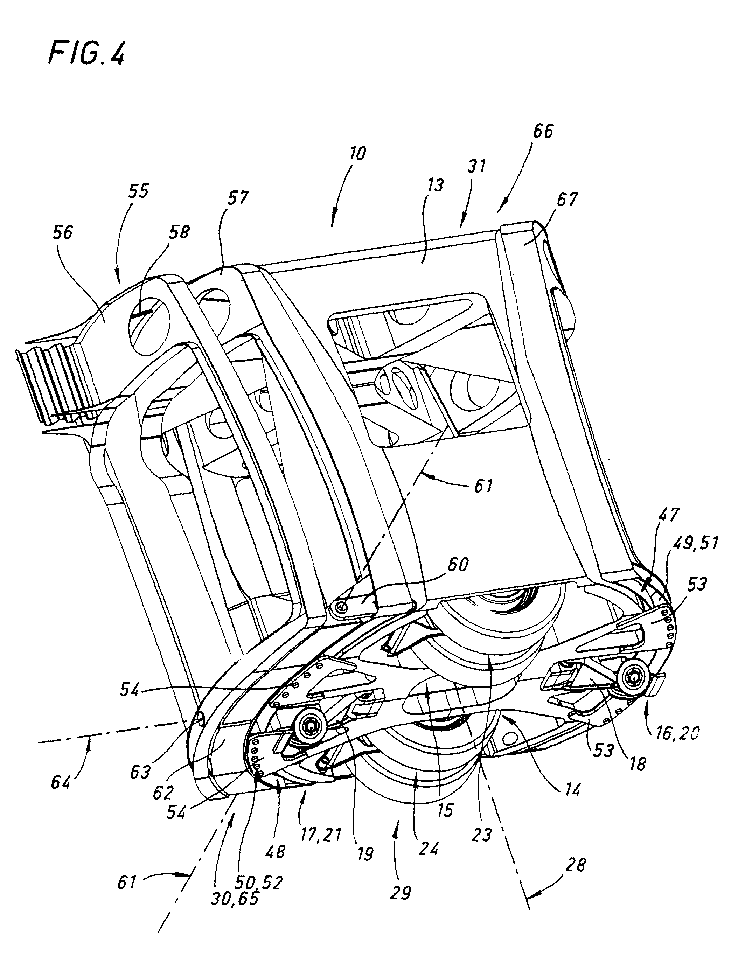

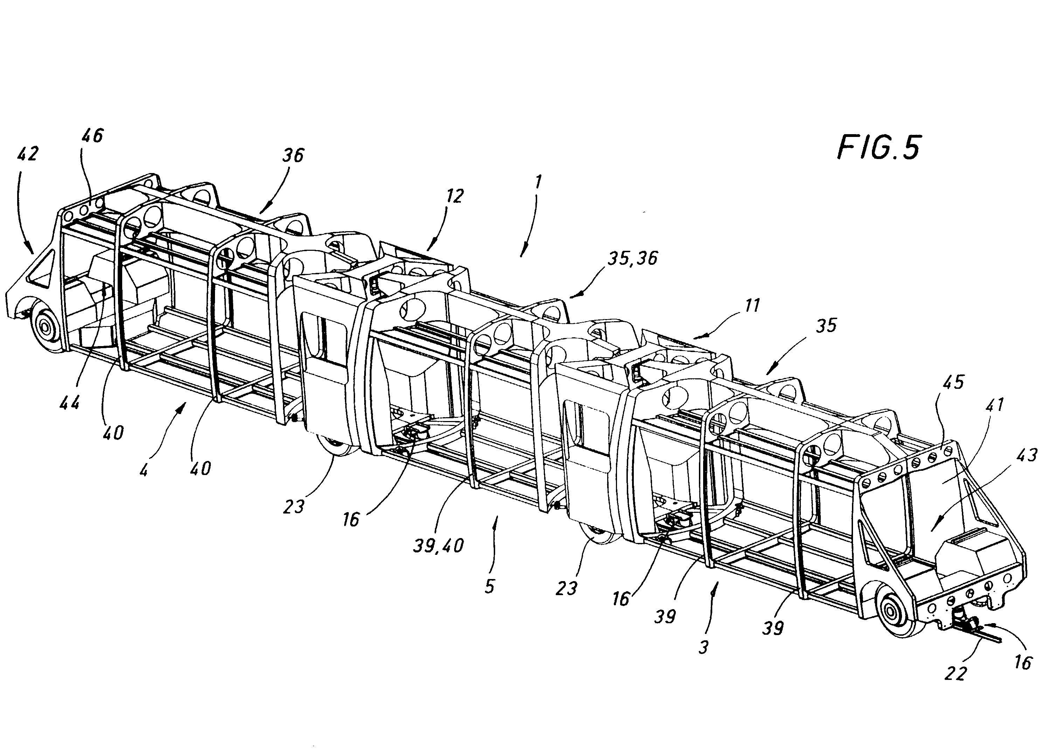

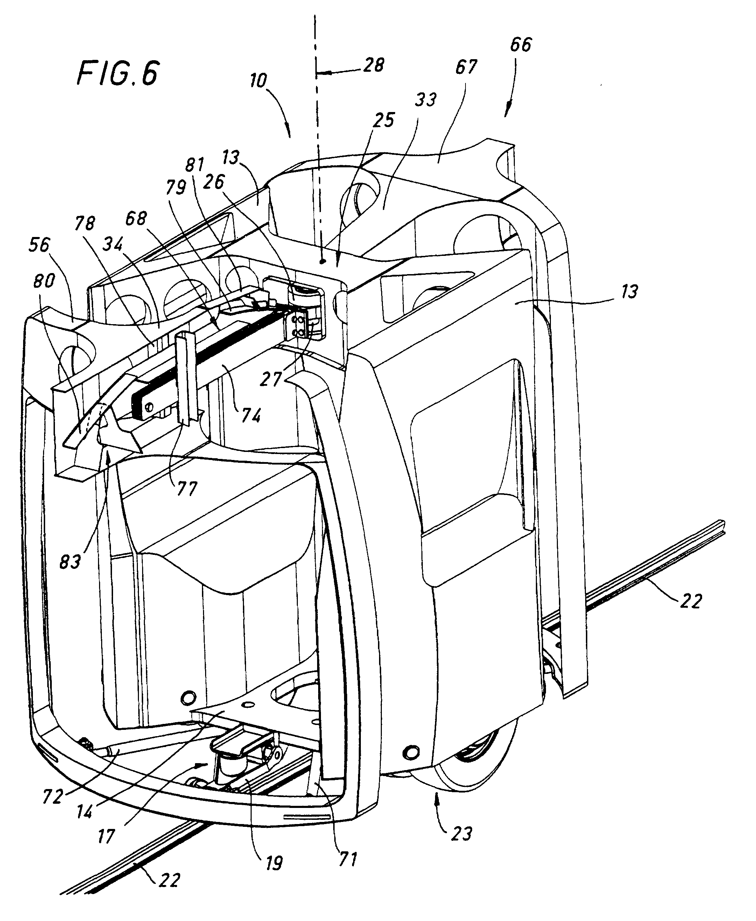

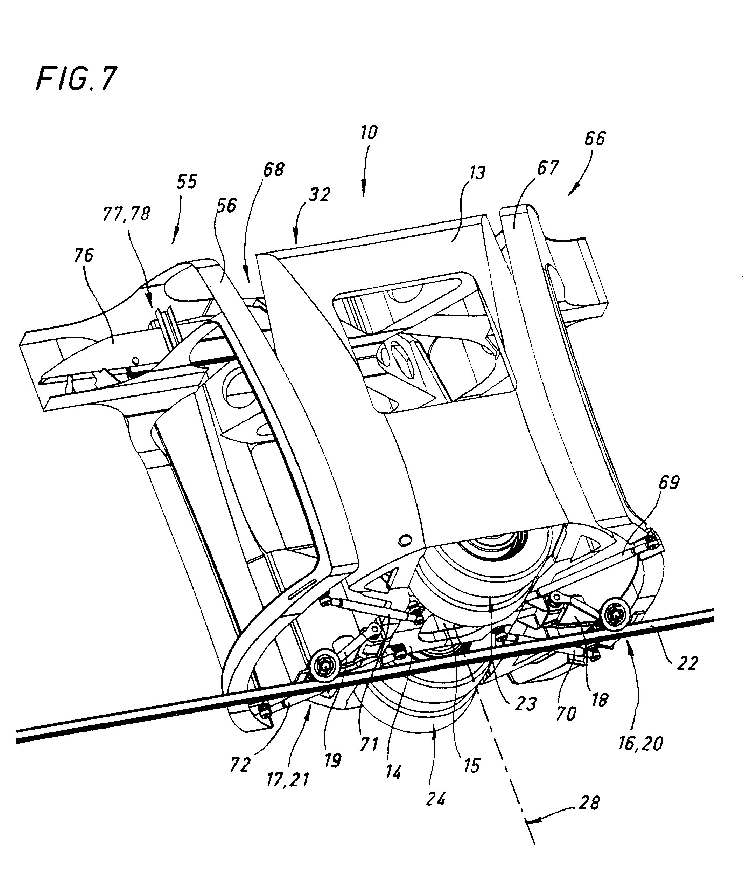

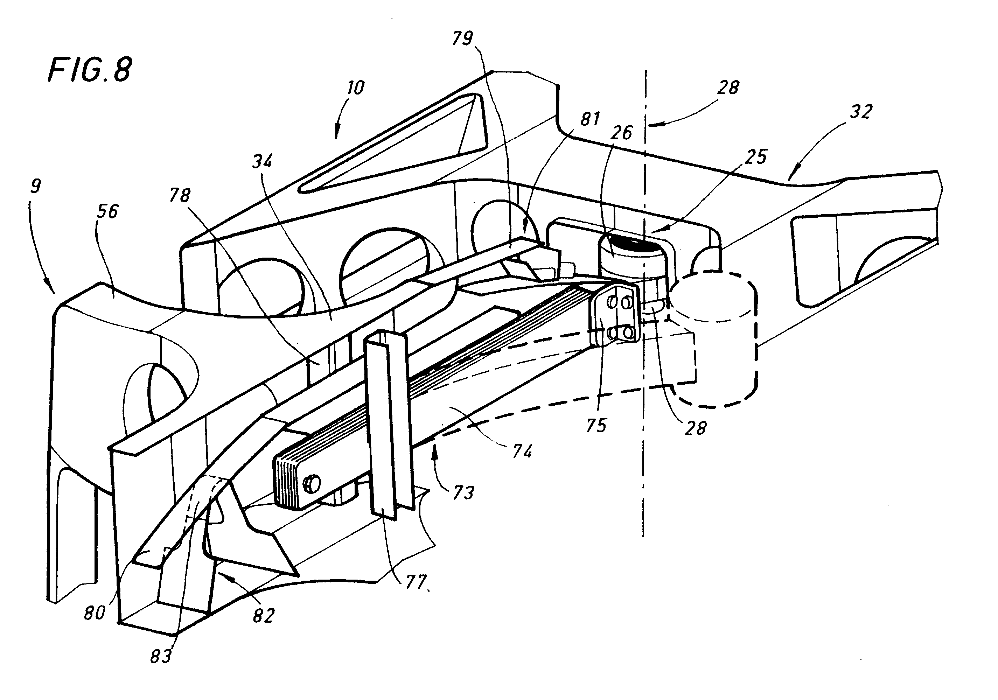

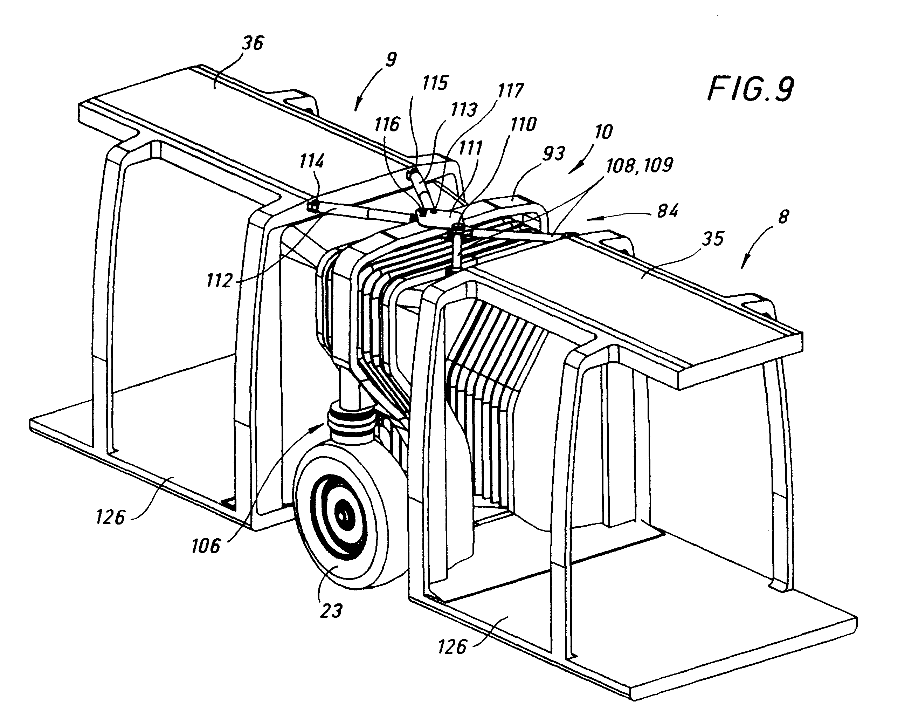

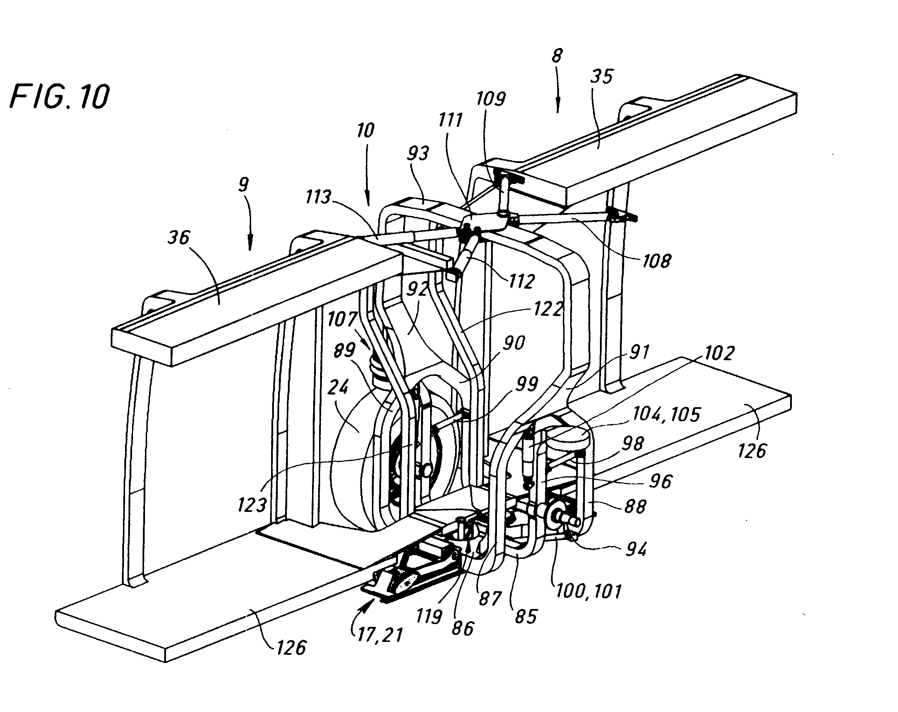

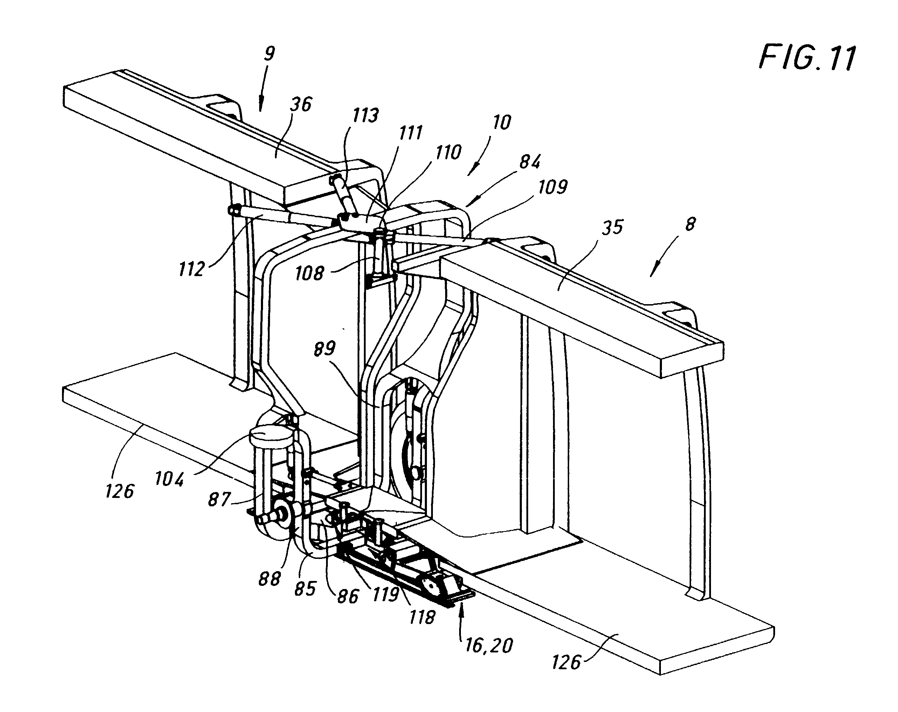

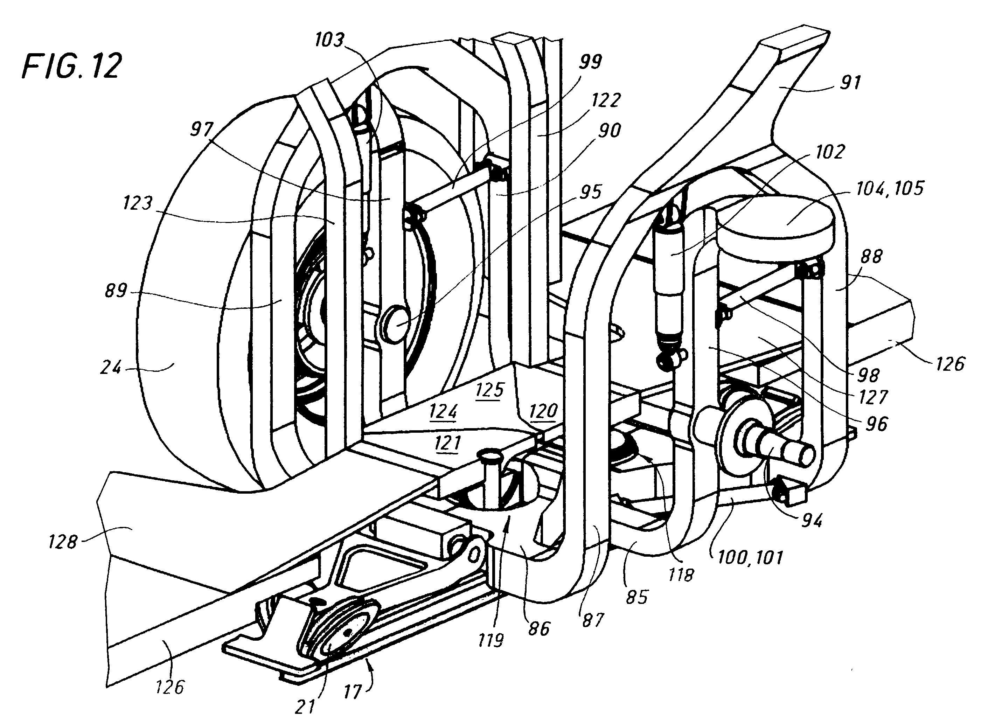

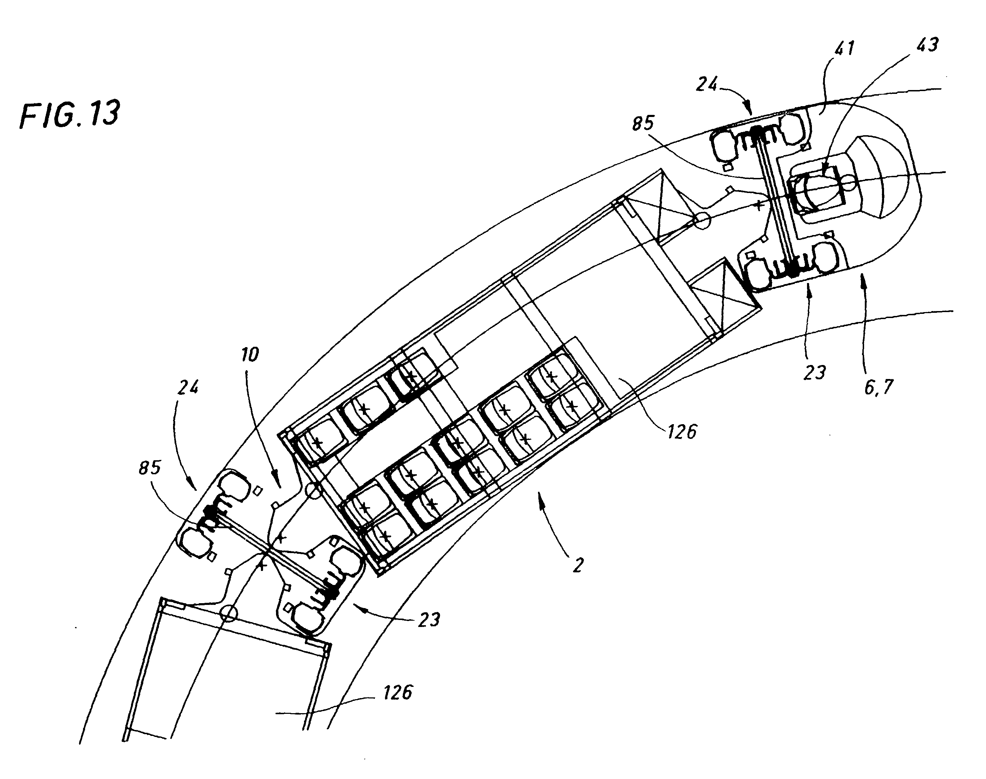

D'autres caractéristiques et avantages de l'invention apparaîtront dans la description qui suit, effectuée de façon non limitative sur un exemple de réalisation en référence aux dessins dans lesquels :
. la figure 1 est une vue schématique d'ensemble montrant les blocs fonctionnels et les axes verticaux de pivotement entre deux voitures successives et un module intermédiaire ;
. la figure 2 est une vue en perspective d'ensemble de l'ossature d'une rame à trois voitures et deux modules intermédiaires selon la variante à couronne ;
. la figure 3 est une vue en perspective de l'avant d'un module intermédiaire selon la variante à couronne ;
. la figure 4 est une vue en perspective montrant le dessous du module intermédiaire selon la variante à couronne ;
. la figure 5 est une vue en perspective d'ensemble de l'ossature d'une rame à trois voitures et à deux modules intermédiaire selon la variante à bielles obliques ;
. la figure 6 est une vue en perspective de l'arrière d'un module intermédiaire selon la variante à bielles obliques ;
. les figures 7 est une vue en perspective montrant le dessous du module intermédiaire selon la version à bielles obliques ;
. la figure 8 est une vue de détail en perspective montrant la liaison supérieure de stabilisation des débattements existant pour la variante à bielles obliques entre la voiture arrière et le module intermédiaire ;
. la figure 9 est une vue générale en perspective d'une variante supplémentaire à rotules ;
. la figure 10 est une vue générale en perspective de la liaison composite selon une variante supplémentaire sous un premier angle de vue avec module intermédiaire sans soufflet de protection et sans une de ses roues ;
. la figure 11 est une vue analogue à celle de la figure 10 sous un deuxième angle de vue ;
. la figure 12 est une vue de détail en perspective montrant plus particulièrement l'espace bi-branches et la partie médiane inférieure du module intermédiaire ;
. la figure 13 est une vue en plan de la dernière variante montrant l'une des têtes directrices motorisées reliées à une voiture adjacente par le même type de liaison.

En se référant à la figure 1, on définit un axe vertical de pivotement A-A' comme l'axe perpendiculaire en son milieu à la ligne d'essieu du module intermédiaire.

On définit un axe vertical ou quasi vertical de pivotement avant B-B' et un axe vertical de pivotement arrière C-C' entre les voitures adjacentes et le module intermédiaire.

La faible inclinaison de l'axe avant B-B' a pour but d'améliorer la stabilité en lacet.

On définit également une liaison articulée avant LAV et une liaison articulée arrière LAR, cette dernière regroupant la fonction de pivotement pur autour d'un axe vertical ainsi que les autres fonctions d'articulation nécessaires pour le fonctionnement général de la liaison composite selon l'invention. On définit aussi un centre inférieur d'articulation de débattement CIAD et une liaison supérieure arrière de stabilisation des mouvements de débattement LASD que LAR comprend dans tous les cas.

On décrira tout d'abord ci-après, à l'aide de la figure générale schématique, les moyens généraux mis en oeuvre par l'invention.

L'invention procède de l'idée générale inventive qui consiste à rapprocher de l'axe A-A', les axes B-B' et C-C' et même à les confondre pour bénéficier de la réduction notable voire de la suppression des accélérations latérales, quitte à réaliser les autres fonctions par des solutions techniques réduisant certains avantages ou plus chères voire plus difficiles à mettre en oeuvre.

L'idée générale inventive consiste également à placer, dans tous les cas, le centre inférieur d'articulation de débattement CIAD en position inférieure dans la liaison articulée arrière LAR.

On peut définir la solution théorique idéale qui consiste à confondre les axes B-B' et C-C' avec l'axe A-A', à réaliser CIAD sous la forme d'un ensemble articulé à effet pendulaire, par exemple à la cardan, placé en position inférieure et à prévoir une liaison supérieure arrière de stabilisation des mouvements de débattement LASD.

L'invention a pour but de rendre exploitable dans le domaine technique et industriel une telle solution théorique idéale et en proposant quelques variantes présentant des avantages propres.

Sur le plan pratique, on crée à l'avant un lien entre la voiture et le module intermédiaire par une liaison articulée de pivotement pur LAV autour d'un axe vertical de pivotement B-B' parallèle à l'axe A-A' et situé le plus près possible de celui-ci voire confondu avec lui. On crée à l'arrière une liaison articulée complexe arrière LAR comprenant une liaison articulée de pivotement pur autour d'un axe vertical C-C' parallèle à l'axe A-A' et situé le plus près possible de celui-ci voire confondu avec lui, cette liaison de pivotement étant complétée par un centre inférieur de débattement CIAD à effet pendulaire réalisé de différentes façons et doublé par la liaison supérieure arrière de stabilisation des mouvements de débattement LASD réalisée également de différentes façons.

Ces différentes possibilités permettent d'envisager de nombreuses variantes présentant chacune des avantages propres dont trois principales d'entre elles seront décrites ci-après. Les autres variantes dérivent plus ou moins directement de ces variantes de base.

La fonction générale de la liaison composite articulée selon l'invention est de permettre le pivotement entre deux voitures successives suspendues à travers un module intermédiaire roulant en absorbant tous les mouvements de roulis, de tangage et la combinaison de ceux-ci. Son but premier est de réduire fortement voire de supprimer totalement les accélérations latérales dues au décalage entre l'axe central de pivotement perpendiculaire à l'essieu et les axes de pivotement propres aux liaisons articulées du module intermédiaire avec chaque voiture adjacente.

Avant de passer à la description détaillée de chacune des variantes, on décrira d'abord ci-après, pour des raisons de simplification, les caractéristiques communes à toutes les variantes.

Le véhicule de transport en commun 1 ou 2 concerné par l'invention se compose, en version minimale de base, d'au moins deux voitures seules ou d'extrémité à savoir une voiture de tête 3 et une voiture de queue 4 et en version commune d'une voiture supplémentaire centrale 5 (figures 2 et 5) ou de deux cabines motrices d'extrémité 6, 7 (figure 13). Bien entendu, les configurations avec ou sans têtes motrices sont applicables à toutes les variantes. Deux voitures successives, une voiture avant 8 et une voiture arrière 9 sont séparées par un support mobile d'articulation appelé module intermédiaire 10. Ce dernier réalise un appui roulant intermédiaire moteur ou non par lequel les voitures sont supportées ainsi qu'une liaison composite articulée entre deux voitures successives.

Il peut s'agir aussi d'un véhicule plus long formé des deux voitures d'extrémité et d'une ou de plusieurs voitures intermédiaires.

On prendra les versions représentées comme exemples de réalisations. Il s'agit soit du cas d'un véhicule constitué de deux voitures d'extrémité 3 et 4, d'une voiture centrale 5 et séparées par deux modules intermédiaires 11 et 12 (figures 2 et 5), soit du cas d'un véhicule avec cabines d'extrémité motorisées 6 et 7 comme représenté sur la figure 13.

Deux voitures successives 8,9 sont supportées et articulées entre elles par un module intermédiaire 10 constituant un support roulant d'articulation formé d'un bâti-carrosserie 13 à structure en cadres monté sur un châssis 14 supporté par un essieu ou un ensemble directionnel roulant 15 par exemple moteur.

Le châssis 14 et donc l'essieu ou l'ensemble directionnel 15 sont orientés au moins par un organe de guidage, ou deux 16,17 dans le cas où deux sens de marche sont souhaités comme pour les variantes représentées sur les figures. Ces organes sont formés par exemple de deux bras de guidage opposés 18,19. Chacun de ces bras de guidage est relevable par pivotement et porte en extrémité un couple 20,21 de galets inclinés destinés à rouler en prise sur un rail 22 de guidage au sol et commander ainsi le mouvement d'orientation des roues 23,24 ou couples de roues dans un sens ou dans les deux sens de marche.

La structure de châssis 14 est disposée à un niveau bas pour gagner de la place vers le bas et situer le plancher à un niveau bas que l'on souhaite en prolongement avec le plan de sol du quai.

Ce gain est possible en raison de la reprise des efforts par les structures supérieures permettant l'allégement des structures inférieures.

L'invention présente trois variantes préférées regroupant les fonctions principales sous des équivalents mécaniques de forme différente.

On distingue une première variante à couronne représentée sur les figures 2 à 4, une variante à bielles obliques représentée sur les figures 5 à 8 et une variante à rotules représentée sur les figures 9 à 13.

Bien entendu, d'autres variantes sont possibles par utilisation des moyens équivalents et/ou se déduisant simplement de l'une ou de l'autre variante de base ou par combinaison des différentes variantes entre elles.

On pourra par exemple utiliser l'avant de la deuxième version et l'arrière de la troisième version.

On décrira maintenant la première variante en référence aux figures de 2 à 4.

Selon cette variante, la liaison composite articulée selon l'invention à travers un module intermédiaire comprend un bloc supérieur d'articulation de pivotement 25 par lequel les extrémités des voitures successives sont réunies. Ce bloc est formé de deux articulations de pivotement superposées 26 et 27 à axe commun vertical de pivotement 28 confondu avec l'axe A-A'.

Ce bloc supérieur d'articulation 25 est complété en partie inférieure par une articulation de pivotement en couronne 29 autour de l'axe commun vertical de pivotement 28 et le module intermédiaire 10 est relié en partie inférieure à la voiture suivante par une articulation complexe 30 à la cardan, comme il sera décrit ci-après, formant le centre inférieur de débattement CIAD.

Les structures de châssis 14 du module intermédiaire 10 sont solidarisées à un corps montant 31 habillé de deux parois latérales verticales réunies entre elles en partie supérieure par une structure mécanique supérieure multibranches 32 destinée à soutenir et à maintenir en position supérieure centrale le bloc supérieur d'articulation de pivotement 25, l'ensemble étant suspendu sur l'essieu 15 du module intermédiaire 10.

Sur le bloc supérieur d'articulation de pivotement 25 sont réunies et pivotent par les deux articulations superposées 26 et 27 les extrémités des prolongements 33 et 34 des structures ou châssis supérieurs 35 et 36 respectivement des voitures avant 8 et arrière 9. Ces prolongements 33 et 34 constituent chacun un timon de liaison entre les châssis supérieurs porteurs 35 ou 36 et l'articulation correspondante de pivotement 26 ou 27 de l'ossature de chaque voiture. Ces châssis supérieurs porteurs 35, 36 sont ainsi supportés par le module intermédiaire 10 comme il apparaît sur les figures, car le bloc supérieur d'articulation de pivotement 25 constitue la seule zone de portée verticale sur laquelle s'appuient les extrémités des châssis supérieurs des voitures. L'invention permet ainsi en reportant en partie supérieure les structures porteuses, d'alléger et de réduire en dimension les structures inférieures conférant la possibilité de réaliser une plate-forme inférieure plus basse et de plus faible épaisseur qui, disposée près du sol permet de gagner en volume et d'obtenir un plancher à niveau avec celui du quai. Un des objectifs de l'invention est ainsi réalisé.

Chaque voiture présente une poutre supérieure 37, 38 d'ossature qui soutient l'ossature et à partir de laquelle l'ossature se développe. Cette ossature est constituée d'une pluralité d'éléments transversaux appelés couples tels que 39,40 conformés en cadre dont la traverse supérieure est solidarisée à la poutre supérieure d'ossature 37,38. Ces couples transversaux délimitent la section transversale du volume intérieur utile de chaque voiture. Ils forment une cage ouverte sur ses faces latérales longitudinales et fermée par des longerons sur ses faces longitudinales supérieure et inférieure comme le montrent les figures 2 et 5.

En raison de la présence de la poutre supérieure d'ossature 37,38 reprenant les efforts verticaux, la structure porteuse de plancher peut être réduite en épaisseur. En profitant de la faible garde au sol possible avec ce type de véhicule, on peut réaliser un plancher à niveau avec le quai.

Les voitures d'extrémité présentent à l'avant ou à l'arrière une face inclinée vitrée 41,42 abritant un logement 43,44 pour un poste de conduite. L'autre extrémité de chaque cabine est conformée en un cadre d'extrémité 45,46 qui marque la fin de la poutre longitudinale supérieure d'ossature 37,38.

En référence plus particulièrement aux figures 3 et 4, le châssis 14 du module intermédiaire 10 de la première variante est conformé au droit des extrémités des voitures en deux pistes opposées 47,48 en arc de cercle sur lesquelles viennent se déplacer des moyens de roulement 49,50 par exemple à rouleaux verticaux tels que 51,52. Ces rouleaux sont prévus en deux groupes, groupes portés à chaque fois et de chaque côté par deux platines horizontales telles que 53,54 solidaires du châssis.

Selon une particularité de la variante représentée, les pistes en arc de cercle sont réalisées sous la forme de deux tôles cintrées espacées d'une distance voisine du diamètre des rouleaux pour leur permettre un déplacement sans jeu sensible.

On réalise ainsi deux articulations ou demi-articulation de pivotement pur autour de l'axe commun de pivotement 28 confondu avec A-A' pour l'une et l'autre liaison LAV et LAR.

L'extrémité avant 55 de la voiture arrière en regard de la face arrière du module intermédiaire présente une structure composite à deux cadres d'extrémité 56,57 juxtaposés dont un premier cadre 56 solidaire de l'extrémité de la voiture arrière 9 et un deuxième cadre 57 solidaire du module intermédiaire 10, les deux cadres étant mobiles entre eux et réunis en partie inférieure par une articulation à la cardan.

Les cadres 56 et 57 sont reliés en partie supérieure par une liaison de stabilisation du débattement formée d'un ou de plusieurs amortisseurs, par exemple deux amortisseurs 58 et 59 disposés en V comme représenté.

Le cadre 57 solidaire du module intermédiaire 10 présente à chacune des extrémités de sa partie inférieure une patte latérale longitudinale telle que 60 servant de support à un axe transversal de pivotement 61 le reliant à travers une pièce intermédiaire 62 au premier cadre 56 d'extrémité solidaire de la voiture arrière 9 pour constituer une articulation de pivotement en basculement de tangage autour de l'axe transversale 61.

Cette articulation de basculement est complétée par une autre articulation 63 de pivotement de roulis autour d'un axe longitudinal médian 64 entre la pièce intermédiaire 63 et la partie inférieure médiane du premier cadre 56 d'extrémité. Ces deux articulations sur la même pièce intermédiaire constituent ensemble une articulation à la cardan 65 qui autorise les débattements en roulis et en tangage de la voiture arrière 9 par rapport au module intermédiaire 10.

Les mouvements relatifs de pivotement correspondant aux modifications directionnelles d'orientation des voitures avant et arrière et de leurs extrémités 55,66 en cadre 56,57 et 67 sont assurés conjointement par le bloc supérieur 25 de pivotement pur déjà décrit en association avec les moyens de roulement inférieurs.

Selon la deuxième variante de base représentée sur les figures de 5 à 8, les moyens de roulement et l'articulation à la cardan sont remplacés du côté avant par deux bielles obliques et les moyens de roulement sont remplacés du côtés arrière également par deux bielles obliques complétées par une liaison supérieure spécifique 68 entre le bloc supérieur d'articulation de pivotement 25 et la poutre supérieure d'ossature correspondante 38.

Selon cette variante, on prévoit de chaque côté de l'essieu 15, entre la partie centrale du châssis 14 du module intermédiaire 10 et symétriquement par rapport à l'axe commun de pivotement et chacun des bras relevables de guidage (version à deux bras de guidage) un couple avant et un couple arrière de bielles obliques 69,70 ; 71,72 de longueur constante rotulées à chacune de leurs extrémités d'une part sur le châssis 14 du module intermédiaire et d'autre part sur la partie inférieure de chacun des cadres d'extrémité des voitures successives 8,9.

Ces bielles obliques représentent des équivalents mécaniques des articulations de pivotement pur à couronne de la version précédente sur les amplitudes courantes de pivotement dans les courbes. Pour cette raison, on adoptera le terme de quasi pivotement pour désigner ces articulations.

Le raccordement de l'extrémité de la voiture arrière 9 avec l'articulation supérieure de pivotement correspondante 27 s'effectue à travers la liaison spécifique 68 dont un exemple de réalisation est représenté en détail sur la figure 8.

Cette liaison 68 a pour but de supporter la charge de la voiture arrière 9 et d'absorber les déplacements relatifs longitudinaux latéraux et mixtes induits par le roulis et le tangage entre l'extrémité de la voiture arrière 9 et le module intermédiaire 10 au niveau de chacune de leur partie supérieure.

Cette liaison 68 est un élément rectiligne 73 faisant office de timon permettant des déformations diverses en flexion et torsion et son montage lui assure une liberté de déplacement longitudinal. Cet élément rectiligne 73 est réalisé sous la forme d'un paquet de feuilles de tôle 74 découpées en lames et immobilisées entre elles à chaque extrémité constituant l'équivalent d'un ressort à lames susceptible de torsion.

Comme on peut le voir sur la figure 8, l'extrémité avant de l'élément rectiligne 73 est montée sur un support 75 fixé sur le corps de l'articulation 27 de pivotement propre à la voiture arrière 9. Son extrémité arrière est rendue solidaire d'un carter 76 qui se déplace longitudinalement avec l'élément rectiligne 73 et se trouve guidé entre deux montants-guides verticaux 77,78. Le carter 76 est ouvert sur une partie de la longueur de ses deux flancs voisine de l'articulation de pivotement 27 pour permettre le travail de flexion des lames de part et d'autre d'une position médiane lors des sollicitations en roulis du cadre par rapport au module intermédiaire 10 comme représenté en traits interrompus sur la figure 8.

Le carter 76 comprend à l'avant et à l'arrière des rampes curvilignes de portée avant 79 et arrière 80.

Dans cette variante, le soutien de la charge représentée par la voiture arrière 9 au niveau du module intermédiaire 10 est assuré par cette liaison spécifique 68.

A l'avant un patin d'appui 81 vient porter sur la rampe curviligne 79 montante proche de l'articulation de pivotement 27 et à l'arrière un frottoir triangulaire 82 à extrémité arrondie 83 vient également porter sur la sous-face de la rampe curviligne arrière descendante 80 faisant partie ou solidaire du carter 76.

Les rampes avant et arrière 79 et 80 présentent un profil curviligne centré sur l'axe inférieur de basculement en mouvements de tangage du centre inférieur de débattement. Cet axe impose aux mouvements de tangage un tracé curviligne selon laquelle les rampes sont conformées.

Lors des mouvements de roulis, l'élément rectiligne 73 immobilisé à un endroit donné par rapport aux montants-guides verticaux 77,78, adopte une flexion d'un côté ou de l'autre (position en traits interrompus).

Lors des mouvements de tangage, ce timon coulisse, mais doit aussi suivre une courbe incurvée imposée par la position inférieure du centre de débattement et le caractère pivotant des mouvements.

L'amortissement des mouvements de roulis et de tangage s'effectue par le frottement des lames entre elles.

Selon un mode supplémentaire d'exécution de l'invention représenté sur les figures 9 à 13 les axes de pivotement verticaux des différentes articulations et liaisons sont parallèles et proches mais distincts de l'axe théorique idéal de pivotement.

Il s'agit du meilleur compromis possible entre la simplicité, les facilités de construction et le coût.

Selon cette variante, le corps du module intermédiaire 10 est formé autour d'un cadre transversal médian tubulaire 84 porté par un essieu 85 et définissant le profil de section droite dudit module intermédiaire pour délimiter le passage intérieur à travers le module.

Ce cadre transversal médian 84 présente une partie inférieure en nacelle selon un fond 86 horizontal de largeur rétrécie par rapport à celle de la pleine section du module, fond se poursuivant de chaque côté vers le haut par deux branches montantes 87,88 ; 89,90 délimitant entre elles un espace ouvert.

Les branches se réunissent entre elles en partie médiane et se confondent en un tronçon intermédiaire 91,92 se poursuivant vers le haut par une partie supérieure de forme générale en arceau. La zone des tronçons intermédiaires 91,92 forme une transition d'évasement entre la partie inférieure et la partie supérieure conformée en arceaux 93.

L'espace ouvert interbranches est utilisé pour le montage de l'essieu 85 disposé dans un plan correspondant au plan médian transversal du module intermédiaire 10 qui est aussi celui défini par l'arceau 93 de la partie supérieure du cadre transversal.

L'essieu 85 présente une forme générale en U qui soutient le module intermédiaire 10 et dont la partie centrale passe sous la structure inférieure du cadre affectant à cet effet sur cette zone la forme d'un tunnel. Cet essieu porte sur chacune de ses parties montantes un pivot de roue 94,95.

Chaque partie montante de l'essieu se poursuit verticalement par un tronçon terminal 96,97 par lequel il est relié à la structure avant bi-branches du cadre transversal médian 84 par exemple par une bielle transversale 98,99 complétée par une bielle inférieure oblique 100,101. Un amortisseur vertical 102,103 est monté entre la branche voisine du cadre et l'essieu.

Le tronçon terminal de chaque branche montante de l'essieu 85 se termine par une platine transversale horizontale 104,105 servant de surface d'appui à un soufflet de suspension 106, 107 relié par son autre extrémité à l'arceau 93 du cadre transversal médian 84.

Selon cette variante, les liaisons supérieures d'articulation aux voitures ne sont que des liaisons sans contrainte de charge verticale.

Plus particulièrement, la voiture avant 8 est reliée par un couple de deux bielles obliques 108,109 de longueur constante articulées à distance l'une de l'autre sur la structure supérieure de ladite voiture avant 8 et se rejoignant en un point d'articulation commun 110 avant porté par une platine de jonction 111 conformée en losange et solidarisée en position médiane sur la face supérieure de l'extrémité supérieure du cadre 84.

La liaison avec la voiture arrière 9 se matérialise par deux amortisseurs télescopiques 112,113 montés en oblique entre deux points d'articulation 114,115 distants l'un de l'autre sur la structure supérieure de la voiture arrière 9 et réunis en une articulation commune supérieure arrière ou deux articulations supérieures arrière 116,117 très proches à l'autre extrémité de la platine de jonction 111 en losange.

Dans le châssis du module intermédiaire, dans le prolongement vertical de l'articulation commune supérieure arrière et du point médian des deux articulations supérieures arrière 116,117 se trouvent une rotule inférieure avant 118 et une rotule inférieure arrière 119 assurant chacune la liaison articulée de pivotement verticale et pendulaire entre le châssis 14 du module intermédiaire et une pièce mobile 120,121 solidaire respectivement du cadre d'extrémité de la voiture avant et de la voiture arrière.

Cette rotule inférieure arrière 119 assure la liaison de pivotement avec la voiture arrière et absorbe les mouvements de tangage et de roulis et reprend la charge de la voiture arrière 9.

A l'avant sur le châssis du module intermédiaire, et dans le prolongement vertical du point d'articulation commun supérieur avant 110 se trouve la rotule avant 118 assurant la liaison articulée de pivotement avec la voiture avant et reprend la charge de la voiture avant 8.

Les rotules avant et arrière 118 et 119 sont proches l'une de l'autre. Elles ne sont séparées que par le passage d'essieu. Les axes verticaux de pivotement sont ainsi également proches de l'axe vertical médian commun de pivotement du module intermédiaire référencé A-A' sur le schéma général.

Il convient de remarquer que la rotule inférieure avant 118 ne doit pas assurer d'autre fonction que celle de pivotement pur autour d'un axe de pivotement vertical. Le choix d'une rotule pour cette fonction n'est dicté que par des considérations technologiques. L'effet pendulaire de la rotule avant est neutralisé par les bielles obliques supérieures 108 et 109 pour éviter tout mouvement parasite.

La prise mécanique haute de chaque rotule est conformée en bout d'arbre chacun solidaire d'une part du corps supérieur de la rotule et d'autre part d'une plaque horizontale 120,121 mobile en pivotement, solidaire respectivement du précadre 122,123 de face avant et arrière de la voiture avant 8 et arrière 9 sur la partie supérieure desquels les bielles obliques de la liaison supérieure sont articulées.

Les plaques pivotantes correspondantes 120,121 présentent une forme telle qu'elles dégagent entre elles un espace libre de forme générale triangulaire 124 de chaque côté occupé par une structure d'obturation 125 déformable en éventail autorisant les mouvements de pivotement dans le plan horizontal qu'elles définissent.

L'ensemble est recouvert par un plateau de protection (non représenté).

Le raccordement avec le plancher bas 126 des voitures adjacentes s'effectue de chaque côté par l'intermédiaire d'une rampe inclinée 127,128.

Comme on peut le constater sur la figure 13, cette version est plus particulièrement mais non restrictivement prévue pour être utilisée avec des cabines motrices d'extrémité avant 6 ou arrière 7 articulées de la même façon avec la voiture adjacente par un module intermédiaire 10 à essieu et les articulations correspondantes décrites ci-dessus.

Cette réalisation offre une grande symétrie de réalisation permettant ainsi de standardiser notablement la fabrication des pièces et le montage des véhicules.

## Revendications

1. Liaison composite articulée entre deux voitures d'extrémité ou successives d'une rame routière qui est constituée d'au moins deux voitures d'extrémité dont une voiture de tête (3) et une voiture de queue (4) séparées par un module intermédiaire (10) porté par un essieu directeur (15), et plus généralement, constituée en plus d'une succession de voitures avant (8) et de voitures arrière (9), les voitures d'extrémité (3,4) et les voitures successives (8,9) étant suspendues à travers le module intermédiaire (10), les extrémités opposées entre des voitures d'extrémité (3,4) et entre des voitures successives (8,9) en configuration de ligne droite étant disposées face à face avec respectivement chacune des extrémités du module intermédiaire (10), l'ensemble formé des voitures successives et du ou des module(s) intermédiaire(s) constituant un véhicule routier autoguidé sous la forme d'une rame de transport en commun, liaison dans laquelle les voitures d'extrémité (3,4) et successives (8,9) sont articulées chacune à un module intermédiaire (10) respectivement par une liaison articulée avant LAV et par une liaison articulée arrière LAR, **caractérisée en ce que** tous les modules intermédiaires (10) et les voitures d'extrémité (3,4) ou les cabines d'extrémité (6,7) de la rame sont autoguidées au sol et **en ce que** la liaison articulée avant LAV entre le module intermédiaire (10) et la ou une voiture avant (3) ou (8) est une liaison de pivotement pur autour d'un axe vertical C-C' et que la liaison articulée arrière LAR entre le module intermédiaire (10) et la ou une voiture arrière (4) ou (9) est une articulation complexe formée d'une liaison de pivotement pur autour d'un axe vertical B-B' complétée par un centre inférieur articulé de débattement CIAD doublé d'une liaison supérieure de stabilisation du débattement LASD permettant d'absorber les mouvements de roulis et de tangage.

2. Liaison selon la revendication 1, **caractérisée en ce que** la liaison articulée avant LAV se compose d'une articulation supérieure (26) de pivotement pur autour d'un d'axe vertical (28) confondu avec l'axe vertical A-A' perpendiculaire à l'essieu en son milieu, doublée d'une articulation inférieure de pivotement autour du même axe vertical (28) confondu avec A-A' et **en ce que** la liaison articulée arrière LAR se compose d'une articulation supérieure (27) de pivotement pur d'axe vertical (28) confondu avec l'axe vertical A-A' doublée d'une liaison supérieure de stabilisation des débattements et d'une articulation inférieure de basculement autour de deux axes croisés (61) et (64).

3. Liaison selon la revendication 2, **caractérisée en ce que** l'articulation inférieure de basculement est une articulation inférieure à la cardan entre les deux cadres mobiles d'extrémité (56,57) de l'extrémité avant de la voiture arrière (9) et **en ce que** les deux axes croisés sont respectivement un axe transversal (61) et un axe longitudinal médian (64).

4. Liaison selon la revendication 3, **caractérisée en ce que** l'articulation inférieure de pivotement de la liaison avant LAV est une articulation du type à couronne (29).

5. Liaison selon la revendication précédente, **caractérisée en ce que** l'articulation inférieure de pivotement du type à couronne (29) est formée d'une pluralité de rouleaux verticaux (51,52) disposés en deux groupes portés par des axes verticaux solidaires du châssis du module intermédiaire (10), lesdits rouleaux se déplaçant sur deux pistes opposées (47,48) conformées en arc de cercle.

6. Liaison selon la revendication 2, **caractérisée en ce que** l'articulation inférieure de pivotement de la liaison arrière LAR est une articulation du type à couronne (29).

7. Liaison selon la revendication précédente, **caractérisée en ce que** l'articulation inférieure de pivotement du type à couronne (29) est formée d'une pluralité de rouleaux verticaux (51,52) portés par des axes verticaux solidaires du châssis du module intermédiaire (10), lesdits rouleaux se déplaçant sur deux pistes opposées (47,48) conformées en arc de cercle.

8. Liaison selon la revendication 2, **caractérisée en ce que** la liaison supérieure de stabilisation des mouvements de débattement d'un cadre d'extrémité (56,57) de la voiture arrière (9) par rapport à l'autre est une liaison comprenant un ou deux amortisseurs (58,59).

9. Liaison selon la revendication 2, **caractérisée en ce que** les articulations supérieures (26) et (27) de pivotement des liaisons articulées avant et arrière sont superposées et à axe commun (28).

10. Liaison selon la revendication 1, **caractérisée en ce que** la liaison articulée avant LAV se compose d'une articulation supérieure de pivotement pur d'axe (28) confondu avec l'axe vertical A-A' perpendiculaire à l'essieu en son milieu, doublée d'une articulation inférieure de quasi pivotement autour de l'axe vertical médian A-A' et **en ce que** la liaison articulée arrière LAR se compose d'une articulation supérieure de pivotement pur d'axe (28) confondu avec l'axe vertical A-A' doublée d'une part d'une articulation inférieure de basculement autour de deux axes croisés l'un longitudinal et l'autre transversal et d'autre part d'une liaison supérieure spécifique (68) de stabilisation des débattements.

11. Liaison selon la revendication 10, **caractérisée en ce que** l'articulation inférieure de quasi-pivotement de la liaison avant LAV est formée de deux bielles obliques rotulées (69,70) montées d'une part sur le châssis (14) du module intermédiaire (10) et d'autre part sur la partie inférieure du cadre d'extrémité (67) de la voiture avant (8) symétriquement par rapport au plan longitudinal médian du module intermédiaire (10).

12. Liaison selon la revendication 10, **caractérisée en ce que** l'articulation inférieure de quasi-pivotement de la liaison arrière LAR est formée de deux bielles obliques (71,72) rotulées montées d'une part sur le châssis (14) du module intermédiaire (10) et d'autre part sur la partie inférieure du cadre d'extrémité (56) de la voiture arrière (9) symétriquement par rapport au plan longitudinal médian du module intermédiaire (10).

13. Liaison selon la revendication 10, **caractérisée en ce que** l'articulation inférieure de basculement est formée des deux bielles obliques inférieures (71,72) de l'articulation de quasi-pivotement.

14. Liaison selon la revendication 10, **caractérisée en ce que** la liaison spécifique (68) supérieure de stabilisation des mouvements de débattement est une liaison rectiligne déformable en flexion et en torsion.

15. Liaison selon la revendication 10 ou 14, **caractérisée en ce que** la liaison spécifique supérieure (68) de stabilisation des mouvements de débattement soutient la charge et est constituée d'un élément rectiligne (73) faisant office de timon formé d'une pluralité de lames métalliques (74) réunies entre elles à chacune de leurs extrémités et fixées par une seule extrémité à un carter (76) ouvert latéralement sur ses faces latérales, carter (76) amorti et guidé dans ses mouvements longitudinaux.

16. Liaison selon la revendication précédente, **caractérisée en ce que** l'élément rectiligne (73) présente une extrémité avant montée sur un support (75) fixé sur le corps de l'articulation (27) de pivotement du bloc supérieur (25) de pivotement propre à la voiture arrière et une extrémité arrière rendue solidaire du carter (76) qui se déplace longitudinalement avec l'élément rectiligne (73) et se trouve guidé entre deux montants verticaux (77,78), et **en ce que** le corps du carter (76) est ouvert sur une partie de la longueur de ses deux flancs voisine de l'articulation de pivotement (27) pour permettre le travail de flexion des lames métalliques (74) lors des sollicitations en roulis et en tangage.

17. Liaison selon la revendication précédente, **caractérisée en ce que** le carter (76) comprend à l'avant et à l'arrière des rampes curvilignes de portée respectivement montante (79) et descendante (80) et à l'avant un patin d'appui (81) venant porter sur la rampe curviligne montante (79) proche de l'articulation de pivotement (27) et à l'arrière un frottoir triangulaire (82) à extrémité arrondie (83) venant porter sur la sous-face de la rampe arrière curviligne descendante (80) faisant partie ou solidaire du carter (76) les dites rampes avant et arrière présentant un profil curviligne dont le tracé est centré sur l'axe inférieur de basculement en mouvements de tangage du centre inférieur de pivotement.

18. Liaison selon la revendication 1, **caractérisée en ce que** la liaison avant LAV est composée d'abord d'une articulation supérieure consistant en deux bielles obliques (108, 109) de longueur constante articulées par leurs extrémités d'une part à distance l'une de l'autre sur la partie supérieure du cadre d'extrémité de la voiture avant (8) et d'autre part en un point d'articulation commun 110 de pivotement autour d'un axe vertical sur une platine de jonction (111) solidaire de la face supérieure du cadre médian (84) d'ossature du module intermédiaire et ensuite d'une articulation inférieure de pivotement de même axe vertical que l'articulation supérieure et **en ce que** la liaison arrière LAR avec la voiture arrière (9) est formée d'abord d'une articulation supérieure consistant en deux amortisseurs télescopiques obliques (112,113) à rappel élastique montées rotulées par leurs extrémités respectivement sur la partie supérieure du cadre d'extrémité de la voiture arrière (9) et sur la platine de jonction (111) en deux points d'articulation voisins et ensuite d'une articulation inférieure de pivotement et de basculement de même axe vertical de basculement que l'articulation supérieure.

19. Liaison selon la revendication 18, **caractérisée en ce que** les axes de pivotement verticaux sont proches l'un de l'autre et proches de l'axe vertical médian A-A' perpendiculaire à l'essieu.

20. Liaison selon la revendication 18, **caractérisée en ce que** l'articulation inférieure de pivotement de la liaison avant LAV est une rotule inférieure avant (118) et **en ce que** l'articulation inférieure de pivotement et de basculement de la liaison arrière LAR est une rotule inférieure arrière (119) assurant chacune la liaison articulée de pivotement verticale et perpendiculaire entre le châssis (14) du module intermédiaire (10) et une pièce mobile (120,121) solidaire respectivement du cadre d'extrémité de la voiture avant (8) et de la voiture arrière (9).

21. Liaison selon la revendication 20, **caractérisée en ce que** la rotule inférieure avant (118) est remplacée par deux bielles obliques.

## Patentansprüche

1. Zusammengesetzte Gelenkverbindung zwischen zwei Wagen, die an den Enden oder benachbart innerhalb eines Gelenktrambusses angeordnet sind, der mindestens zwei endständige Wagen aufweist, von denen der eine ein Kopfwagen (3) und der andere ein Schlußwagen (4) ist, die durch eine Zwischenbaugruppe (10), welche von einer Lenkachse (15) getragen ist, voneinander getrennt sind, und der in allgemeinerer Form aus einer Folge von vorderen (8) und hinteren Wagen (9) zusammengesetzt ist, wobei die endständigen Wagen (3, 4) und die benachbarten Wagen (8,9) an der Zwischenbaugruppe (10) angehängt sind, wobei die einander gegenüberliegenden Enden der endständigen Wagen (3, 4) und der benachbarten Wagen (8, 9) bei einer geradlinigen Ausrichtung so angeordnet sind, daß sie dem entsprechenden Ende der Zwischenbaugruppe (10) direkt zugewandt sind, und die Gesamtheit aus den benachbarten Wagen und der Zwischenbaugruppe bzw. den Zwischenbaugruppen ein selbstgelenktes Straßenfahrzeug in der Ausführung als Gelenkzug für den öffentlichen Verkehr bildet, wobei die Verbindung, mittels derer die endständigen Wagen (3, 4) und die benachbarten Wagen (8, 9) mittels jeweils einer vorderen Gelenkverbindung LAV und einer hinteren Gelenkverbindung LAR an eine Zwischenbaugruppe (10) angelenkt sind, **dadurch gekennzeichnet ist, daß** alle Zwischenbaugruppen (10) und die endständigen Wagen (3, 4) oder die endständigen Führerkabinen (6, 7) des Zugs am Boden selbstgelenkt sind, daß die vordere Gelenkverbindung LAV zwischen der Zwischenbaugruppe (10) und dem oder einem vorderen Wagen (3 oder 8) als reine Schwenkverbindung zum Schwenken um eine vertikale Achse C-C' ausgebildet ist, und daß die hintere Gelenkverbindung LAR zwischen der Zwischenbaugruppe (10) und dem oder einem hinteren Wagen (4 oder 9) ein mehrteiliges Gelenk ist, das durch eine reine Schwenkverbindung zum Schwenken um eine vertikale Achse B-B' gebildet und durch ein unteres Gelenkzentrum zum Aufnehmen von Verschiebebewegungen CIAD vervollständigt ist, welches seinerseits mittels einer oberen Verbindung zum Stabilisieren gegen Verschiebebewegungen LASD ergänzt ist, die das Dämpfen von Kipp- und Nickbewegungen ermöglicht.

2. Verbindung gemäß Anspruch 1, **dadurch gekennzeichnet, daß** die vordere Gelenkverbindung LAV ein oberes Gelenk (26) zum reinen Schwenken um eine vertikale Achse (28) aufweist, die mit der vertikalen, senkrecht und mittig zur Tragachse angeordneten Achse A-A' zusammenfällt, das mittels eines unteren Gelenks zum Schwenken um dieselbe vertikale Achse (28), die mit der Linie A-A' zusammenfällt, verstärkt ist, und daß die hintere Gelenkverbindung LAR ein oberes Gelenk (27) zum reinen Schwenken um eine vertikale Achse (28), die mit der vertikalen Achse A-A' zusammenfällt, aufweist, das mittels einer oberen Verbindung zum Stabilisieren gegen Verschiebebewegungen und mittels eines unteren Wiegegelenks, das um zwei überkreuz angeordnete Achsen (61 und 64) beweglich ist, verstärkt ist.

3. Verbindung gemäß Anspruch 2, **dadurch gekennzeichnet, daß** das untere Wiegegelenk als Kardangelenk ausgebildet und zwischen den beiden beweglichen Endrahmen (56, 57) am Vorderende des hinteren Wagens (9) angeordnet ist, und daß die beiden überkreuz angeordneten Achsen eine Querachse (61) und eine mittig angeordnete Längsachse (64) darstellen.

4. Verbindung gemäß Anspruch 3, **dadurch gekennzeichnet, daß** das untere Schwenkgelenk der vorderen Verbindung LAV als Rollengelenk (29) ausgebildet ist.

5. Verbindung gemäß dem vorangehenden Anspruch, **dadurch gekennzeichnet, daß** das untere Schwenkgelenk, das als Rollengelenk (29) ausgebildet ist, eine Vielzahl von vertikal angeordneten Rollen (51, 52) aufweist, die in zwei Gruppen angeordnet und von vertikalen, fest mit dem Untergestell der Zwischenbaugruppe 10 verbundenen Achsen gehalten sind, wobei sich die Rollen entlang zweier einander gegenüberliegender Laufflächen (47, 48) bewegen, die als Kreisbögen ausgebildet sind.

6. Verbindung gemäß Anspruch 2, **dadurch gekennzeichnet, daß** das untere Schwenkgelenk der hinteren Verbindung LAR als Rollengelenk (29) ausgebildet ist.

7. Verbindung gemäß dem vorangehenden Anspruch, **dadurch gekennzeichnet, daß** das untere Schwenkgelenk, das als Rollengelenk (29) ausgebildet ist, eine Vielzahl von vertikal angeordneten Rollen (51, 52) aufweist, die von vertikalen, fest mit dem Untergestell der Zwischenbaugruppe (10) verbundenen Achsen gehalten sind, wobei sich die Rollen entlang zweier einander gegenüberliegender Laufflächen (47; 48) bewegen, die als Kreisbögen ausgebildet sind.

8. Verbindung gemäß Anspruch 2, **dadurch gekennzeichnet, daß** die obere Verbindung zum Stabilisieren gegen Verschiebebewegungen des einen Endrahmens (56, 57) des hinteren Wagens (9) relativ zum anderen Endrahmen eine oder zwei Dämpfer (58, 59) aufweist.

9. Verbindung gemäß Anspruch 2, **dadurch gekennzeichnet, daß** die oberen Schwenkgelenke (26) und (27) der vorderen und hinteren Gelenkverbindungen übereinander angeordnet sind und eine gemeinsame Achse (28) aufweisen.

10. Verbindung gemäß Anspruch 1, **dadurch gekennzeichnet, daß** die vordere Gelenkverbindung LAV ein oberes Gelenk zum reinen Schwenken um eine Achse (28) aufweist die mit der vertikalen, senkrecht und mittig zur Tragachse angeordneten Achse A-A' zusammenfällt, das mittels eines unteren Gelenks verstärkt ist, welches bezüglich der mittleren vertikalen Achse A-A' quasi-schwenkbar ist, und daß die hintere Gelenkverbindung LAR ein oberes Gelenk zum reinen Schwenken um eine Achse (28) aufweist, die mit der vertikalen Achse A-A' zusammenfällt und die einerseits mittels eines unteren Wiegegelenks mit zwei überkreuz angeordneten Achsen, von denen die eine eine Längsachse und die andere eine Querachse ist, andererseits mittels einer besonderen oberen Verbindung (68) zum Stabilisieren gegen Verschiebebewegungen verstärkt ist.

11. Vorrichtung gemäß Anspruch 10, **dadurch gekennzeichnet, daß** das quasi-schwenkbare untere Gelenk der vorderen Gelenkverbindung LAV zwei Schräglenker (69, 70) aufweist, die einerseits am unteren Teil (14) der Zwischenbaugruppe (10) und andererseits am Unterteil des Endrahmens (67) des vorderen Wagens (8) symmetrisch bezogen auf die in Längsrichtung verlaufende Mittelebene der Zwischenbaugruppe (10) gelenkig angebracht sind.

12. Verbindung gemäß Anspruch 10, **dadurch gekennzeichnet, daß** das quasi-schwenkbare untere Gelenk der hinteren Gelenkverbindung LAR zwei Schräglenker (71, 72) aufweist, die einerseits am Untergestell (14) der Zwischenbaugruppe (10) und andererseits am unteren Teil des Endrahmens (56) des hinteren Wagens (9) symmetrisch bezogen auf die in Längsrichtung verlaufende Mittelebene der Zwischenbaugruppe (10) gelenkig angebracht sind.

13. Verbindung gemäß Anspruch 10, **dadurch gekennzeichnet, daß** das untere Wiegegelenk durch die beiden unteren Schräglenker (71, 72) des quasi-schwenkbaren Gelenks gebildet ist.

14. Verbindung gemäß Anspruch 10, **dadurch gekennzeichnet, daß** die besondere obere Verbindung (68) zum Stabilisieren gegen Verschiebebewegungen als geradlinige Verbindung ausgebildet ist, die durch Biegung und Torsion deformierbar ist.

15. Verbindung gemäß Anspruch 10 oder 14, **dadurch gekennzeichnet, daß** die besondere obere Verbindung (68) zum Stabilisieren gegen Verschiebebewegungen die Last trägt und daß sie ein gerades Bauteil (73) aufweist, das als Deichsel fungiert und aus einer Vielzahl von Lamellen (74) aus Metall gebildet ist, die an ihren Enden jeweils miteinander und nur mit einem ihrer Enden mit einem Gehäuse (76) verbunden sind, das bezüglich seiner Bewegungen in Längsrichtung gedämpft und geführt ist.

16. Verbindung gemäß dem vorangehenden Anspruch, **dadurch gekennzeichnet, daß** das gerade Bauteil (73) ein vorderes Ende, das an einer Haltevorrichtung (75) festliegt, die am Körper des Schwenkgelenks (27) der zum hinteren Wagen gehörenden oberen Schwenkeinrichtung (25) befestigt ist, sowie ein hinteres Ende aufweist, das mit dem Gehäuse (76), welches sich mit dem geraden Bauteil (73) in Längsrichtung verschiebt und dabei zwischen zwei Pfosten (77, 78) geführt ist, in fester Verbindung steht, und daß die Seitenwände des Gehäusekörpers dort, wo das Gehäuse (76) an die Schwenkverbindung (27) angrenzt, offen sind, um das Biegen der Metallamellen (74) während der Beanspruchung durch Kipp- und Nickbewegungen zu ermöglichen.

17. Verbindung gemäß dem vorangehenden Anspruch, **dadurch gekennzeichnet, daß** das Gehäuse (76) im vorderen und im hinteren Bereich gekrümmte Zungen mit aufwärts (79) bzw. abwärts (80) gerichtetem Verlauf, sowie im vorderen Bereich einen Auflageschuh (81), der in der Nähe des Schwenkgelenks (27) auf der aufwärts verlaufenden gekrümmten Zunge (79) anliegt, und im hinteren Bereich ein dreieckförmiges Gleitstück (82) mit abgerundeter Kante (83) aufweist, die auf der Unterseite der hinteren, abwärts verlaufenden gekrümmten Zunge anliegt, wobei Auflageschuh und Gleitstück Bestandteile des Gehäuses (76) oder fest mit diesem verbunden sind und wobei die vordere und die hintere Zunge ein gekrümmtes Profil aufweisen, dessen Verlauf bei Nickbewegungen des unteren Schwenkzentrums an der unteren Kippachse ausgerichtet ist.

18. Verbindung gemäß Anspruch 1, **dadurch gekennzeichnet, daß** die vordere Verbindung LAV zunächst ein oberes Gelenk mit zwei Schräglenkern fester Länge (108, 109) aufweist, die mit ihren Enden in Abstand voneinander am oberen Teil des Endrahmens des vorderen Wagens (8) und zum anderen mittels eines gemeinsamen Gelenks (110) zum Schwenken um eine vertikale Achse an einer Verbindungsplatte (111) befestigt sind, die mit der Oberseite des Mittelrahmens (84) der Tragkonstruktion verbunden ist, und daß sie des Weiteren ein unteres Gelenk zum Schwenken um dieselbe vertikale Achse wie das obere Gelenk aufweist, und daß die hintere Verbindung LAR mit dem hinteren Wagen (9) zunächst ein oberes Gelenk mit zwei schrägstehenden Teleskopdämpfern (112, 113) aufweist, die ein elastisches Rückstellverhalten besitzen und die mit ihren Enden am oberen Teil des Endrahmens des hinteren Wagens (9) bzw. an zwei benachbarten Gelenkstellen an der Verbindungsplatte (111) gelenkig angebracht sind, und daß sie des Weiteren ein unteres Schwenk- und Wiegegelenk aufweist, das dieselbe vertikale Kippachse besitzt wie das obere Gelenk.

19. Verbindung gemäß Anspruch 18, **dadurch gekennzeichnet, daß** die vertikalen Schwenkachsen zueinander eng benachbart angeordnet sind und in der Nähe der senkrecht zur Tragachse verlaufenden vertikalen Mittelachse liegen.

20. Verbindung gemäß Anspruch 18, **dadurch gekennzeichnet, daß** das untere Schwenkgelenk der vorderen Verbindung LAV als unteres vorderes Drehgelenk und daß das untere Schwenk- und Kippgelenk der hinteren Verbindung LAR als unteres hinteres Drehgelenk ausgebildet ist, die jeweils die in vertikaler und dazu senkrechter Richtung schwenkbare gelenkige Verbindung zwischen dem Untergestell (14) der Zwischenbaugruppe (10) und einem beweglichen Bauteil (120, 121) sicherstellen, das fest mit dem Endrahmen des vorderen Wagens (8) bzw. des hinteren Wagens (9) verbunden ist.

21. Verbindung gemäß Anspruch 20, **dadurch gekennzeichnet, daß** das untere vordere Drehgelenk (118) durch zwei Schräglenker ersetzt ist.

## Claims

1. Composite articulated connection between two end cars or successive cars of a set of cars which comprises at least two end cars, one front car (3) and one rear car (4), which are separated by an intermediate module (10) carried by a control axle (15), and, more generally, which further comprises a succession of front cars (8) and rear cars (9), the end cars (3, 4) and the successive cars (8, 9) being suspended across the intermediate module (10), the opposite ends between end cars (3, 4) and between successive cars (8, 9) in a straight-line configuration being arranged face to face with each of the ends of the intermediate module (10), respectively, the assembly formed by successive cars and the intermediate module(s) constituting an automatically guided road vehicle in the form of a common transport train, in which connection the end cars (3, 4) and successive cars (8, 9) are each articulated to an intermediate module (10) by a front articulated connection LAV and by a rear articulated connection LAR, respectively, **characterised in that** all of the intermediate modules (10) and the end cars (3, 4) or the end cabs (6, 7) of the train are automatically guided on the ground, and **in that** the front articulated connection LAV between the intermediate module (10) and the or a front car (3) or (8) is a true-pivoting connection about a vertical axis C-C', and **in that** the rear articulated connection LAR between the intermediate module (10) and the or a rear car (4) or (9) is a complex articulation which is formed by a true-pivoting connection about a vertical axis B-B' which is complemented by an articulated lower clearance centre CIAD which is mirrored by an upper clearance-stabilisation connection LASD which allows rolling and pitching movements to be absorbed.

2. Connection according to claim 1, **characterised in that** the front articulated connection LAV comprises an upper articulation (26) for true pivoting about a vertical axis (28) coincident with the vertical axis A-A' which is perpendicular to the axle at the centre thereof, mirrored by a lower articulation for pivoting about the same vertical axis (28) coincident with A-A', and **in that** the rear articulated connection LAR comprises an upper articulation (27) for true pivoting having a vertical axis (28) coincident with the vertical axis A-A', mirrored by an upper connection for stabilising clearances and a lower articulation for tilting about two intersecting axes (61) and (64).

3. Connection according to claim 2, **characterised in that** the lower tilting articulation is a lower cardan-type articulation between the two movable end frames (56, 57) of the front end of the rear car (9), and **in that** the two intersecting axes are a transverse axis (61) and a longitudinal median axis (64), respectively.

4. Connection according to claim 3, **characterised in that** the lower pivoting articulation of the front connection LAV is a collar-type articulation (29).

5. Connection according to the preceding claim, **characterised in that** the lower pivoting collar-type articulation (29) is formed by a plurality of vertical rollers (51, 52) which are arranged as two groups carried by vertical axes which are integral with the chassis of the intermediate module (10), the rollers being displaced over two opposing tracks (47, 48) which are in the form of a circular arc.

6. Connection according to claim 2, **characterised in that** the lower pivoting articulation of the rear connection LAR is a collar-type articulation (29).

7. Connection according to the preceding claim, **characterised in that** the lower pivoting collar-type articulation (29) is formed by a plurality of vertical rollers (51, 52) carried by vertical axes which are integral with the chassis of the intermediate module (10), the rollers being displaced over two opposing tracks (47, 48) which are in the form of a circular arc.

8. Connection according to claim 2, **characterised in that** the upper connection for stabilising clearance movements of an end frame (56, 57) of the rear car (9) relative to the other is a connection comprising one or two dampers (58, 59).

9. Connection according to claim 2, **characterised in that** the upper pivoting articulations (26) and (27) of the front and rear articulated connections are coincident and have a common axis (28).

10. Connection according to claim 1, **characterised in that** the front articulated connection LAV comprises an upper articulation for true pivoting having an axis (28) coincident with the vertical axis A-A' which is perpendicular to the axle at the centre thereof, mirrored by a lower articulation for quasi-pivoting about the vertical median axis A-A', and **in that** the rear articulated connection LAR comprises an upper articulation for true pivoting having an axis (28) coincident with the vertical axis A-A', mirrored, on the one hand, by a lower articulation for tilting about two intersecting axes, one being longitudinal and the other transverse, and, on the other hand, by an upper specific connection (68) for stabilising clearances.

11. Connection according to claim 10, **characterised in that** the lower quasi-pivoting articulation of the front connection LAV is formed by two jointed oblique links (69, 70) which are mounted, on the one hand, on the chassis (14) of the intermediate module (10) and, on the other hand, on the lower portion of the end frame (67) of the front car (8) symmetrically relative to the longitudinal median plane of the intermediate module (10).

12. Connection according to claim 10, **characterised in that** the lower quasi-pivoting articulation of the rear connection LAR is formed by two articulated oblique links (71, 72) which are mounted, on the one hand, on the chassis (14) of the intermediate module (10) and, on the other hand, on the lower portion of the end frame (56) of the rear car (9) symmetrically relative to the longitudinal median plane of the intermediate module (10).

13. Connection according to claim 10, **characterised in that** the lower tilting articulation is formed by two lower oblique links (71, 72) of the quasi-pivoting articulation.

14. Connection according to claim 10, **characterised in that** the upper specific connection (68) for stabilising clearance movements is a rectilinear connection which can be deformed in terms of flexion and torsion.

15. Connection according to claim 10 or claim 14, **characterised in that** the upper specific connection (68) for stabilising clearance movements supports the load and comprises a rectilinear element (73) which acts as a drawbar formed by a plurality of metal plates (74) which are connected to each other at each of the ends thereof and which are fixed at a single end to a housing (76) which is open laterally at the lateral faces thereof and which is damped and guided in terms of longitudinal movements.

16. Connection according to the preceding claim, **characterised in that** the rectilinear element (73) has a front end which is mounted on a support (75) fixed to the body of the pivoting articulation (27) of the upper pivoting unit (25) belonging to the rear car and a rear end which is integral with the housing (76) which is displaced longitudinally with the rectilinear element (73) and which is guided between two vertical stanchions (77, 78), and **in that** the body of the housing (76) is open over a portion of the length of the two flanks thereof that is adjacent to the pivoting articulation (27) in order to allow the flexion action of the metal plates (74) during rolling and pitching stresses.

17. Connection according to the preceding claim, **characterised in that** the housing (76) comprises, at the front and rear, ascending (79) and descending (80) curved carrying ramps, respectively, and, at the front, a support runner (81) which rests on the ascending curved ramp (79) near the pivoting articulation (27) and, at the rear, a triangular friction plate (82) having a rounded end (83) which rests on the underside of the descending rear curved ramp (80) which is part of or integral with the housing (76), the front and rear ramps having a curved profile whose alignment is centred on the lower tilting axis for pitching movements of the lower pivoting centre.

18. Connection according to claim 1, **characterised in that** the front connection LAV comprises, firstly, an upper articulation which comprises two oblique links (108, 109) of constant length which are articulated at the ends thereof, on the one hand, with spacing from each other to the upper portion of the end frame of the front car (8) and, on the other hand, by means of a common articulation point (110) for pivoting about a vertical axis to a junction plate (111) which is integral with the upper face of the median frame (84) of the framework of the intermediate module and, subsequently, a lower pivoting articulation having the same vertical axis as the upper articulation, and **in that** the rear connection LAR, with the rear car (9), is formed, firstly, by an upper articulation which comprises two oblique telescopic dampers (112, 113) with resilient return which are mounted jointed at the ends thereof to the upper portion of the end frame of the rear car (9) and to the junction plate (111) at two adjacent articulation points, respectively, and, subsequently, by a lower pivoting and tilting articulation having the same vertical tilting axis as the upper articulation.

19. Connection according to claim 18, **characterised in that** the vertical pivoting axes are close to each other and close to the median vertical axis A-A' which is perpendicular to the axle.

20. Connection according to claim 18, **characterised in that** the lower pivoting articulation of the front connection LAV is a front lower trunnion (118), and **in that** the lower pivoting and tilting articulation of the rear connection LAR is a rear lower trunnion (119), each ensuring the vertical and perpendicular pivoting articulated connection between the chassis (14) of the intermediate module (10) and a movable element (120, 121) which is integral with the end frame of the front car (8) and the rear car (9), respectively.

21. Connection according to claim 20, **characterised in that** the front lower trunnion (118) is replaced by two oblique links.
